# EUROPEAN PATENT APPLICATION

(11) **EP 3 486 720 A1**
(43) Date of publication of application: **22.05.2019**
(21) Application number: 17202060.4
(22) Date of filing: 16.11.2017
(51) Int. Cl.: G03B 21/14

(54) **PROJECTION LAMP**

(71) Applicant: Many Wain Enterprise Co., Ltd., Tainan City (TW)
(72) Inventor: YEH, Neng-Chen, Tainan City (TW)
(74) Representative: Pallini Gervasi, Diego

(57) **Abstract**

A projection lamp has a shell (10), a lamp cap (20), a light-emitting module (30), and a projection member. The lamp cap (20) is disposed on the shell (10). The light-emitting module (30) is disposed in the shell (10) and has at least three light-emitting elements (32) and at least three lenses (33). The at least three lenses (33) cover the at least three light-emitting elements (32). The projection member (40) is disposed on the light-emitting module (30) between the light-emitting module (30) and the lamp cap (20), and has a transparent plate (41), an opaque layer (42), and a concave portion (43). The transparent plate (41) is disposed in the shell (10) between the light-emitting module (30) and the lamp cap (20). The opaque layer (42) is disposed on the transparent plate (41). The concave portion (43) is formed through the opaque layer (42).

## Description

### 1. Field of the Invention

The present invention relates to a projection lamp, and more particularly to a projection lamp that may improve the variability of the projection lamp.

### 2. Description of Related Art

A conventional projection lamp has a shell, a light-emitting module, a projection member, and a lamp cap. The shell has a front surface, a chamber, and an opening. The chamber is formed in the shell. The opening is formed through the front surface of the shell and is in communication with the chamber of the shell. The light-emitting module is disposed on the shell in the chamber and faces the opening of the shell. The light-emitting module has a circuit board, a light-emitting element, and a lens. The circuit board is disposed on the shell. The light-emitting element is disposed on the circuit board. The lens is disposed on the circuit board and covers the light-emitting element.

The projection member is disposed on the shell in the chamber and is located between the light-emitting module and the opening of the shell. The projection member has an opaque body and a hollow portion. The opaque body is disposed on the shell. The hollow portion is punched and is formed through the opaque body. The lamp cap is disposed on the shell and covers the opening of the shell. Light emitted by the light-emitting element may pass through the lens, the hollow portion, and the lamp cap for projecting a pattern shown with the hollow portion.

However, the conventional projection lamp has the single light-emitting element and the single lens. The single light-emitting element emits light in a single color. The color shown with the pattern projected out of the shell is dull. The conventional projection lamp cannot show a colorful pattern. In addition, the hollow portion showing the pattern is formed through the opaque body by the punching method. The pattern shown with the hollow portion is limited. When the pattern shown with the hollow portion is complex, the structural strength of the opaque body is damaged by the hollow portion.

To overcome the shortcomings, the present invention provides a projection lamp to mitigate or obviate the aforementioned problems.

The objective of the invention is to provide a projection lamp that improves the variability of the color and the pattern shown out of the projection lamp, and solves the problems of the limitation of the pattern and the damage of the structural strength of the projection member.

The projection lamp has a shell, a lamp cap, a light-emitting module, and a projection member. The shell has a front surface, a chamber, and an opening. The chamber is formed in the shell. The opening is formed through the front surface of the shell and communicates with the chamber of the shell. The lamp cap is disposed on the front surface of the shell and covers the opening of the shell. The light-emitting module is disposed in the shell and has a circuit board, at least three light-emitting elements, and at least three lenses. The circuit board is disposed in the shell in the chamber. The at least three light-emitting elements are disposed on the circuit board at spaced intervals and face the opening of the shell. The at least three lenses are disposed on the circuit board and respectively cover the at least three light-emitting elements. The projection member is disposed in the shell, is located between the light-emitting module and the lamp cap, and has a transparent plate, an opaque layer, and a concave portion. The transparent plate is disposed in the shell and faces the light-emitting module. The opaque layer is disposed on the transparent plate and faces the lamp cap. The concave portion is formed through the opaque layer and is connected to the transparent plate.

The light beams emitted by the at least three light-emitting elements respectively pass through the at least three lenses, and then the light beams pass through the transparent plate and the concave portion of the projection member. The light beams emitted by the at least three light-emitting elements pass out of the lamp cap. The patterns shown with the concave portion are projected out of the lamp cap. The light beams of the at least three light-emitting elements can be in the same or different colors. When the colors of the light beams are different, the light beams can be mixed for increasing the color variability. The projection lamp may provide the projection effects of the same pattern in different colors, or different patterns in the same colors, or different patterns in different colors. In addition, the patterns are shown with the concave portion of the projection member. The concave portion is not formed through the transparent plate for keeping the integrity of the transparent plate and increasing the structural strength of the projection member. The patterns shown with the concave portion formed through the opaque layer are delicate. The restriction of the patterns on the projection member is decreased. The variability of the patterns on the projection member is increased.

Other objectives, advantages and novel features of the invention will become more apparent from the following detailed description when taken in conjunction with the accompanying drawings.

### IN THE DRAWINGS:

Fig. 1 is a perspective view of a projection lamp in accordance with the present invention;
Fig. 2 is an exploded perspective view of the projection lamp in Fig. 1;
Fig. 3 is an enlarged and exploded perspective view of a light-emitting module of the projection lamp in Fig. 2;
Fig. 4 is a side view in partial section of the projection lamp in Fig. 1;
Fig. 5 is an enlarged cross sectional side view of a projection member of the projection lamp in Fig. 4;
Fig. 6 is a perspective view of the projection member of the projection lamp showing a first pattern;
Fig. 7 is a perspective view of the projection member of the projection lamp showing a second pattern; and
Fig. 8 is a perspective view of the projection member of the projection lamp showing a third pattern.

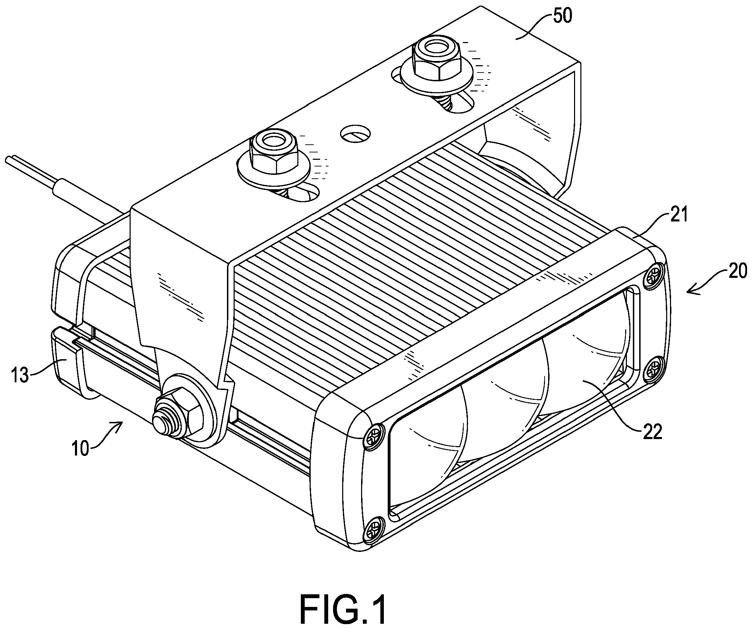

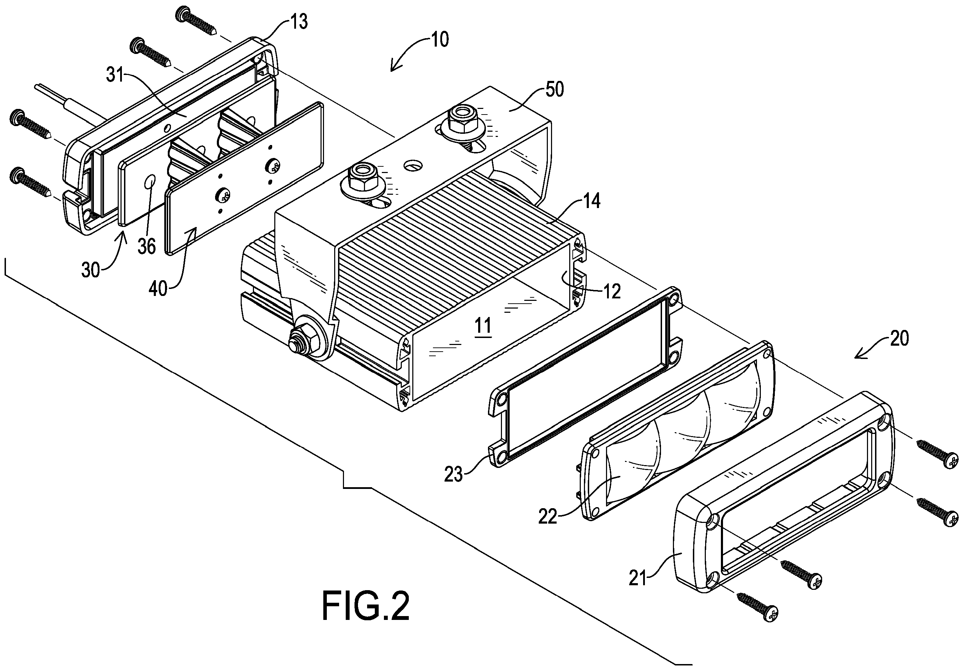

With reference to Figs. 1 and 2, a projection lamp in accordance with the present invention comprises a shell 10, a lamp cap 20, a light-emitting module 30, and a projection member 40.

The shell 10 has a front surface, a chamber 11, and an opening 12. The chamber 11 is formed in the shell 10. The opening 12 is formed through the front surface of the shell 10 and is in communication with the chamber 11 of the shell 10. Furthermore, the shell 10 has a base 13 and a wall 14. The base 13 faces the opening 12 of the shell 10. The wall 14 is formed around the base 13 and is disposed around the chamber 11 of the shell 10.

The lamp cap 20 is disposed on the front surface of the shell 10 and covers the opening 12 of the shell 10. Furthermore, the lamp cap 20 is disposed on the wall 14 and has a fixing frame 21, a transparent seat 22, and a washer 23. The fixing frame 21 is disposed on the wall 14. The transparent seat 22 is disposed on the wall 14 and is located between the wall 14 and the fixing frame 21. The washer 23 is disposed on the transparent seat 22 and abuts the wall 14.

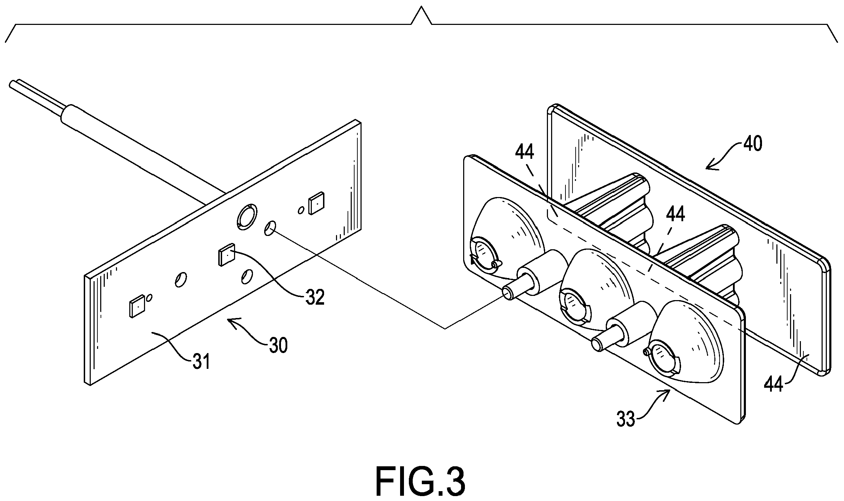

The light-emitting module 30 is disposed in the shell 10 and is located in the chamber 11 of the shell 10. With reference to Fig. 3, the light-emitting module 30 has a circuit board 31, at least three light-emitting elements 32, and at least three lenses 33. The circuit board 31 is disposed in the shell 10. The at least three light-emitting elements 32 are disposed on the circuit board 31 at spaced intervals and face the opening 12 of the shell 10. The at least three lenses 33 are disposed on the circuit board 31 and respectively cover the at least three light-emitting elements 32. Furthermore, the light-emitting module 30 is disposed on the base 13 of the shell 10. Each one of the at least three lenses 33 has a body 34, a first convex surface 35, and a second convex surface 36. The first convex surface 35 and the second convex surface 36 are respectively formed on two side surfaces of the body 34. The first convex surface 35 faces a corresponding one of the at least three light-emitting elements 32. The second convex surface 36 faces the opening 12 of the shell 10.

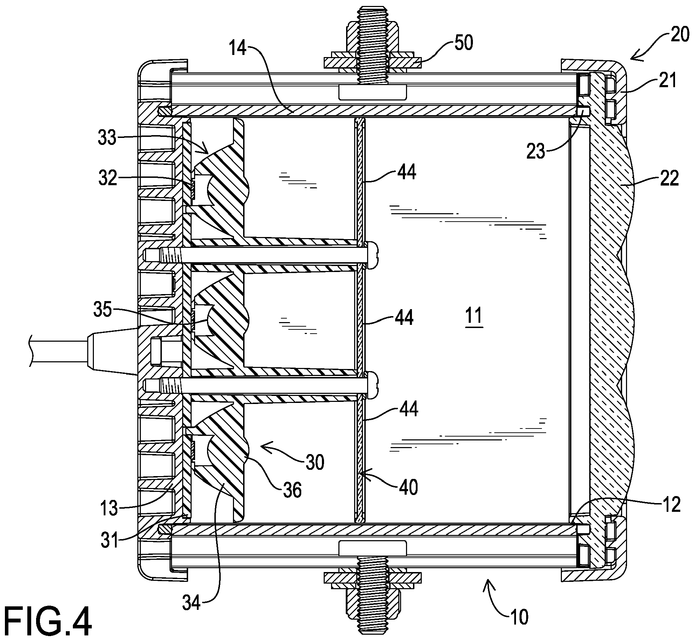

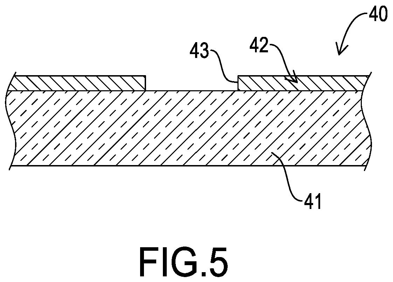

With reference to Figs. 3 to 5, the projection member 40 is disposed in the shell 10, is located between the light-emitting module 30 and the lamp cap 20, and has a transparent plate 41, an opaque layer 42, and a concave portion 43. The transparent plate 41 is disposed in the shell 10 and faces the light-emitting module 30. The opaque layer 42 is disposed on the transparent plate 41 and faces the lamp cap 20. The concave portion 43 is formed through the opaque layer 42 and is connected to the transparent plate 41. The projection member 40 has at least three pattern sections 44. The at least three pattern sections 44 are defined on the transparent plate 41 and respectively face the at least three lenses 33.

With reference to Fig. 1, the projection lamp has a connecting frame 50. The connecting frame 50 is disposed across the wall 14 of the shell 10.

In use, the light beams emitted by the at least three light-emitting elements 32 respectively pass through the at least three lenses 33. The light beams pass through the first convex surface 35 and the second convex surface 36 of a corresponding one of the at least three lenses 33. The light beams pass through the transparent plate 41 and the concave portion 43, and further pass through the transparent seat 22 of the lamp cap 20. The patterns shown with the concave portion 43 of the projection member 40 can be projected out of the lamp cap 20.

The at least three light-emitting elements 32 are light-emitting diodes. The light beams emitted by the at least three light-emitting elements 32 may be in the same or different colors. When the colors of the light beams are different, the light beams pass through the lenses 33 and pass out of the transparent seat 22, and the light beams can be mixed to generate colorful light beams. Furthermore, the light beams emitted by the at least three light-emitting elements 32 respectively pass through the concave portion 43 at the at least three pattern sections 44. The projection lamp may project the same pattern in different colors, or different patterns in the same color, or different patterns in different colors.

Moreover, the concave portion 43 is formed through the opaque layer 42 and is not formed through the transparent plate 41. The integrity and the structural strength of the transparent plate 41 would not be decreased by the concave portion 43.

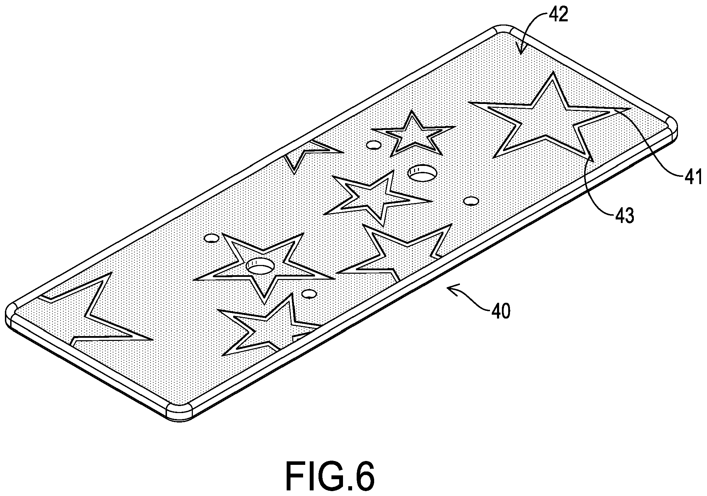

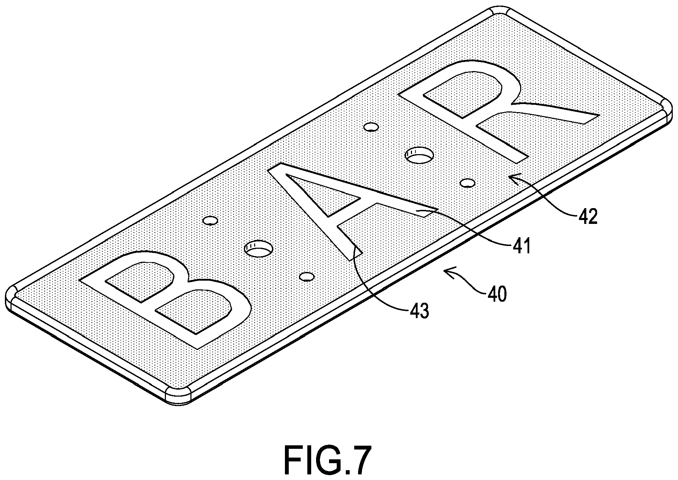

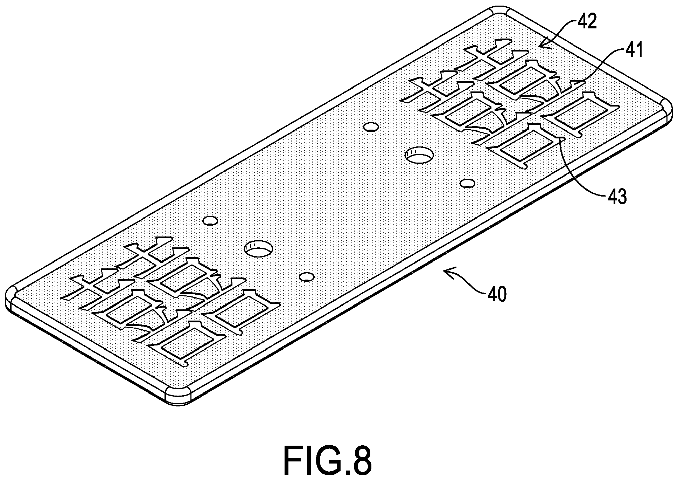

With reference to Figs. 6 to 8, the concave portion 43 is formed through the opaque layer 42 and is not formed through the transparent plate 41. The patterns shown with the concave portion 43 are delicate. Part of the concave portion 43 is disposed around part of the opaque layer 42. Part of the opaque layer 42 surrounded by the concave portion 43 is still supported by the transparent plate 41, displaying the pattern with a lighted section surrounding a dark section.

Furthermore, the opaque layer 42 is disposed on the transparent plate 41 by using vacuum coating method. The concave portion 43 is formed through the opaque layer 42 by using laser engraving method.

Accordingly, the light-emitting module 30 has the at least three light-emitting elements 32 and the at least three lenses 33. The light-emitting module 30 corresponds to the transparent seat 22 of the lamp cap 20. The light beams of the at least three light-emitting elements 32 can be in the same or different colors. The different colors of the light beams may be mixed for increasing the variability of the colors. In addition, the light-emitting module 30 corresponds to the concave portion 43 on the at least three pattern sections 44 for increasing the projection variability.

In addition, the concave portion 43 does not damage the integrity of the transparent plate 41. The opaque layer 42 is supported by the transparent plate 41 for decreasing the restriction of the patterns on the projection member 40 and increasing the variability of the patterns. The integrity of the transparent plate 41 and the structural strength of the projection member 40 are good.

## Claims

1. A projection lamp, **characterized in that** the projection lamp comprises:
a shell (10) having
a front surface;
a chamber (11) formed in the shell (10); and
an opening (12) formed through the front surface of the shell (10) and communicating with the chamber (11) of the shell (10);
a lamp cap (20) disposed on the front surface of the shell (10) and covering the opening (12) of the shell (10);
a light-emitting module (30) disposed in the shell (10), located in the chamber (11) of the shell (10), and having
a circuit board (31) disposed in the shell (10);
at least three light-emitting elements (32) disposed on the circuit board (31) and facing the opening (12) of the shell (10); and
at least three lenses (33) disposed on the circuit board (31) at spaced intervals and respectively covering the at least three light-emitting elements (32); and
a projection member (40) disposed in the shell (10), located between the light-emitting module (30) and the lamp cap (20), and having
a transparent plate (41) disposed in the shell (10) and facing the light-emitting module (30);
an opaque layer (42) disposed on the transparent plate (41) and facing the lamp cap (20); and
a concave portion (43) formed through the opaque layer (42) and connected to the transparent plate (41).

2. The projection lamp as claimed in claim 1, wherein
the shell (10) has
a base (13) facing the opening (12) of the shell (10); and
a wall (14) formed around the base (13); and
the lamp cap (20) is disposed on the wall (14) and has
a fixing frame (21) disposed on the wall (14);
a transparent seat (22) disposed on the wall (14) between the wall (14) and the fixing frame (21); and
a washer (23) disposed on the transparent seat (22) and abutting the wall (14).

3. The projection lamp as claimed in claims 1 or 2, wherein the projection lamp has a connecting frame (50), and the connecting frame (50) is disposed across the wall (14).

4. The projection lamp as claimed in any one of claims 1 to 3, wherein the projection member has at least three pattern sections (44), and the at least three pattern sections (44) respectively face the at least three lenses (33).
